(19) Europäisches Patentamt / European Patent Office / Office européen des brevets

(11) **EP 4 679 518 A1**

(12) **EUROPEAN PATENT APPLICATION**
published in accordance with Art. 153(4) EPC

(43) Date of publication:
**14.01.2026 Bulletin 2026/03**

(21) Application number: **24933176.0**

(22) Date of filing: **30.05.2024**

(51) International Patent Classification (IPC):
$H01M\ 4/131\ ^{(2010.01)}$    $H01M\ 4/525\ ^{(2010.01)}$
$H01M\ 4/505\ ^{(2010.01)}$    $H01M\ 4/485\ ^{(2010.01)}$
$H01M\ 4/36\ ^{(2006.01)}$    $H01M\ 10/0525\ ^{(2010.01)}$
$C01G\ 53/00\ ^{(2025.01)}$

(52) Cooperative Patent Classification (CPC):
Y02E 60/10

(86) International application number:
**PCT/CN2024/096387**

(87) International publication number:
**WO 2025/227453 (06.11.2025 Gazette 2025/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.04.2024 CN 202410545370**

(71) Applicant: **Beijing Easpring Material Technology Co., Ltd.**
**Beijing 100160 (CN)**

(72) Inventors:
• **TONG, Junfan**
**Beijing 100160 (CN)**

• **FU, Haikuan**
**Beijing 100160 (CN)**
• **JIN, Yuqiang**
**Beijing 100160 (CN)**
• **WANG, Rui**
**Beijing 100160 (CN)**
• **ZHANG, Xuequan**
**Beijing 100160 (CN)**
• **LIU, Yafei**
**Beijing 100160 (CN)**
• **CHEN, Yanbin**
**Beijing 100160 (CN)**

(74) Representative: **Nederlandsch Octrooibureau**
**P.O. Box 29720**
**2502 LS The Hague (NL)**

(54) **POSITIVE ELECTRODE ACTIVE MATERIAL AND PREPARATION METHOD THEREFOR, POSITIVE ELECTRODE SHEET, BATTERY, AND ELECTRIC DEVICE**

(57) The present application relates to the technical field of lithium-ion battery, and particularly, to a cathode active material and a preparation method thereof, a positive electrode plate, a battery, and an electrical apparatus. An offset angle of a (104) diffraction peak of the cathode active material is $\alpha^n_m$. n is the number of charging cycles of a battery including the cathode active material, where n is an integer; m% is a percentage of a charging capacity to a total capacity of the battery at a n-th charging cycle of the battery; $\alpha^n_m$ is a 2θ value corresponding to the (104) diffraction peak in an XRD diffraction spectrum of the cathode active material when the percentage of the charging capacity to the total capacity of the battery is m% at the n-th charging cycle of the battery; $\alpha^n_m$ satisfies: $\alpha^{100}_{50} - \alpha^{100}_0 \leq 0.250°$; and $\alpha^{100}_{100} - \alpha^{100}_0 \leq 1.500°$. The cathode active material can remain stable in multiple charging and discharging processes, and the battery containing the same has a long cycle life.

EP 4 679 518 A1

**Description**

**PRIORITY INFORMATION**

This application claims priority to and benefits of Chinese patent application No. 202410545370.7, filed with China National Intellectual Property Administration on April 30, 2024, the entire contents of which are incorporated herein by reference.

**FIELD**

The present disclosure relates to the technical field of lithium-ion battery, and particularly, to a cathode active material and a preparation method thereof, a positive electrode plate, a battery, and an electrical apparatus.

**BACKGROUND**

At present, a lithium-ion battery is one of the most advanced rechargeable batteries. Since Sony Company introduced its technology to the market in 1991, the lithium-ion batteries have been widely used in mobile phones, laptops, new energy vehicles, and other fields. As a core component of a battery, a research and development of electrode materials have been promoting a continuous development and progress of the lithium-ion battery. Compared with an anode material, a cathode material is the most important factor affecting battery performance, which directly determines a capacity and cycle performance of the lithium-ion battery. Therefore, if safety performance and specific energy of the battery are to be further improved, a better cathode material needs to be developed to match with the safety performance and the lithium-ion battery of the battery.

Continuous optimization and development of ternary materials, as one of the focuses of a development of lithium-ion battery cathode materials, is of great significance to improving a battery life of the new energy vehicle. The ternary materials have a structure formula of $LiNi_xCo_yM_{1-x-y}O_2$ (M is Mn or Al), which can be classified into NCM and NCA based on different metal elements M. A ternary material NCM combines advantages of cobalt and manganese, and makes up for respective shortcomings of the cobalt and the manganese to a certain extent. The ternary material NCM has advantages such as high specific capacity, satisfactory rate performance, low cost, and low environmental pollution. Therefore, the ternary material NCM has become one of the mainstream choices for the cathode material of the battery and has been widely developed and applied. Specifically, the ternary material NCM has a crystal structure of α-NaFeO2 and belongs to an R3m space group. As a composition ratio of Ni, Co and Mn changes, the properties such as capacity and safety performance of the material can be controlled to a certain extent. The ternary materials are usually named based on the elemental ratio, such as 111/442/622, which represents proportions of Ni, Mn, and Co, respectively. According to the market demand and research, as for the composition ratio of Ni, Co and Mn, it has been gradually a trend that the Ni content is high while the contents of Co and Mn are low, and the ternary materials with a ratio of Ni exceeding 80% or even 90% is gradually becoming mainstream of the market. While high nickel brings higher energy density, more problems such as deteriorated cycle performance and reduced safety caused by an unstable material structure subsequent to charging and discharging cycles. With the increase in the Ni content, a problem of instability in this crystal structure is also amplified, especially a phenomenon of Li/Ni mixed occupancy frequently occurs in high-nickel ternary materials. This is attributed to that $Ni^{2+}$ may easily migrate to a $Li^+$ site due to the facts that an ionic radius of $Ni^{2+}$ (0.069 nm) is close an ionic radius of $Li^+$ (0.076 nm) and that a migration energy barrier of nickel ions is very low, which may occur in a synthesis stage of the ternary materials and in a charging and discharging process. Severe lithium-nickel disordering may affect deintercalation and electrochemical performance of the lithium ions. Such a structural defect may increase an internal resistance of the material, reduce electrochemical activity, and decrease the cycle performance. However, in addition, with appropriate Li/Ni mixed occupancy, Ni atoms mixed into a Li layer can interact with O atoms, which can help to stabilize the material structure. In repeated charging and discharging processes of the material, the initial layered structure of the material changes with repeated deintercalation of Li+, and an interaction force between transition metal ions and an oxygen layer changes due to the changes in a Li layer and changes in transition metal valence states. Before or after charging and discharging, the Li layer cannot return to the initial state of the Li layer, resulting in an irreversible change in a relative position of a transition metal layer and the oxygen layer. With the increase in the number of charging and discharging cycles, such a change will be gradually intensified, such that the material structure itself has a profound impact on stability of the transition metal layer and a service life of the material. The change of this material structure with the charging and discharging is also intuitively reflected in XRD characterization. A [104] peak representing a hexagonal structure and a cubic structure may shift to the right with deintercalation of lithium. When the lithium returns to a lithium layer, the [104] peak may shift towards the initial position, but cannot return to the initial position with a structural change caused by lithium-nickel disordering.

In order to solve the above-described problems, main means currently adopted include adjusting a sintering curve to control a size, a structure, and morphology of particles, coating, doping, and single crystallization. In the current research and development, the doping is used to enhance strength of the particles themselves, or direct contact between electrolyte and the cathode material is limited by coating, or the above-described object is achieved directly through the single crystallization. However, due to the rapid development of high nickel promoted by the market, the lithium-nickel mixed occupancy of the material itself and the large amount of lithium-nickel disordering in a cycle process have become important factors restricting the development of the high-nickel ternary materials. The conventional means seem to be ineffective in the improvement of the performances of the high-nickel ternary materials. Therefore, further optimization in a synthesis process based on the material itself is even more important.

SUMMARY

The present disclosure aims to solve at least one of the technical problems in the related art. Therefore, an object of the present disclosure is to provide a cathode active material and a preparation method thereof, to solve the problems of an unstable structure and a short cycle life of the cathode material during charging and discharging of a battery containing the same.

To this end, in a first aspect of the present disclosure, a cathode active material is provided. An offset angle of a (104) diffraction peak of the cathode active material is $\alpha^n_m$, where: n is the number of charging cycles of a battery comprising the cathode active material, n being an integer; m% is a percentage of a charging capacity to a total capacity of the battery at a n-th charging cycle of the battery; $\alpha^n_m$ is a 2θ value corresponding to the (104) diffraction peak in an XRD diffraction spectrum of the cathode active material when the percentage of the charging capacity to the total capacity of the battery is m% at the n-th charging cycle of the battery; and $\alpha^n_m$ satisfies: $\alpha^{100}_{50} - \alpha^{100}_0 \leq 0.250°$, and $\alpha^{100}_{100} - \alpha^{000}_0 \leq 1.500°$..

In the present disclosure, the offset angle $\alpha^n_m$ of the (104) diffraction peak is used to intuitively reflect reversibility of a structure of the cathode active material at the time of Li+ intercalation and deintercalation, and structural stability of the cathode active material when the cathode active material is in a Li+-deintercalation state. When the cathode active material $\alpha^n_m$ satisfies the above-described conditions, that is, when the cathode active material can remain stable in multiple charging and discharging processes, the battery containing the same has a relatively long cycle life.

According to some embodiments of the present disclosure, a height change value $\Delta S_{(TMO2)}$ of a transition metal layer in the cathode active material satisfies: $\Delta S_{(TMO2)} < 0.50$Å, in which: $\Delta S_{(TMO2)} = S_{(TMO2)}^0 - S_{(TMO2)}^1$. $S_{(TMO2)}^1$ is a height of the transition metal layer in the cathode active material when the battery comprising the cathode active material is in a first full charge state. $S_{(TMO2)}^0$ is a height of the transition metal layer in the cathode active material prior to that the battery comprising the cathode active material is subjected to a first charge. $\Delta S_{(TMO2)}$ is a value of a change between the height of the transition metal layer in the cathode active material when the battery comprising the cathode active material is in the first full charge state and the height of the transition metal layer in the cathode active material prior to that the battery comprising the cathode active material is subjected to the first charge.

According to some embodiments of the present disclosure, the height change value $\Delta S_{(TMO2)}$ of the transition metal layer in the cathode active material satisfies: $\Delta S_{(TMO2)} < 0.45$Å.

According to some embodiments of the present disclosure, the height change value $\Delta S_{(TMO2)}$ of the transition metal layer in the cathode active material satisfies: $\Delta S_{(TMO2)} < 0.40$Å.

According to some embodiments of the present disclosure, the cathode active material satisfies at least one of the following conditions: $\alpha^n_m$ satisfies: $\alpha^{100}_0 - \alpha^1_0 \leq 0.750°$; in an intrinsic XRD diffraction spectrum of the cathode active material, a peak intensity ratio $I_{(003)}/I_{(104)}$ of a (003) diffraction peak to a (104) diffraction peak ranges from 1.20 to 1.60; in the intrinsic XRD diffraction spectrum of the cathode active material, when the 2θ value ranges from 43° to 46°, a full width at half maximum $\psi$ of a corresponding peak satisfies $0.230° \leq \psi \leq 0.260°$; and a median particle size $D_{50}$ of the cathode active material satisfies $0.8\mu m \leq D_{50} \leq 14.2\mu m$.

According to some embodiments of the present disclosure, the cathode active material includes a lithium-containing metal oxide having a chemical formula represented by formula (1): $Li_aNi_xCo_yMn_zM_bO_2$ (1), where: $0.9 \leq a \leq 1.2$, $0.3 \leq x < 0.99$, $0.01 \leq y \leq 0.5$, $0.01 \leq z \leq 0.5$, $0 \leq b \leq 0.2$; and M is selected from at least one of Al, Zr, Y, Ti, Nb, Cr, Er, Mg, Ba, V, Sr, Ta, Mo, W, or Ce.

According to some embodiments of the present disclosure, the cathode active material includes a coating layer disposed on a surface of the lithium-containing metal oxide.

According to some embodiments of the present disclosure, the coating layer includes oxide containing at least one element of Al, B, Si, W, Ti, or Ce.

In a second aspect of the present disclosure, a preparation method of the cathode active material is provided. The preparation method includes: (1) mixing a cathode active material precursor, a lithium source, and a first dopant, and performing a first sintering process to obtain a cathode active material intermediate 1; (2) mixing the cathode active material intermediate 1 with a second dopant, and performing a second sintering process to obtain a cathode active material intermediate 2; and (3) mixing the cathode active material intermediate 2 with a coating agent, and performing third sintering process to obtain the cathode active material.

This preparation method is a three-stage sintering process to optimize the structural stability of the cathode active material to the greatest extent and to ensure that initial mixed occupancy degree of the cathode active material is within a certain range. Also, the offset angle $\alpha$ of the (104) diffraction peak of the cathode active material and the height change valve $\Delta S_{(TMO2)}$ of the transition metal layer further indicate that performance is optimized after the lithium-nickel disordering is reduced in a cycle process

According to some embodiments of the present disclosure, conditions for the first sintering process include: sintering at a temperature $T_1$ for 1.5 hours to 3 hours, the temperature $T_1$ ranging from 300°C to 500°C; heating up to a temperature $T_2$, and sintering at the temperature $T_2$ for 8 hours to 12 hours, the temperature $T_2$ ranging from 650°C to 1,100°C; and sintering atmosphere of oxygen, a flow rate of oxygen ranging from 150 L/(L·h) to 200 L/(L·h).

According to some embodiments of the present disclosure, conditions for the second sintering process include: sintering at a temperature $T_3$ for 6 hours to 8 hours, the temperature $T_3$ satisfying $T_2-50\times(1.9-n)\leq T_3\leq T_2-50\times(1.1-n)$, where n is a ratio of a total molar amount of metal doping elements in the second dopant to a total molar amount of elements Ni, Co, and Mn in the cathode active material precursor; and sintering atmosphere of oxygen, a flow rate of oxygen ranging from 150 L/(L·h) to 200 L/(L·h).

According to some embodiments of the present disclosure, conditions for the third sintering process include: sintering at a temperature ranging from 270°C to 350°C for 6 hours to 12 hours.

According to some embodiments of the present disclosure, the cathode active material precursor is a nickel-cobalt-manganese cathode active material precursor.

According to some embodiments of the present disclosure, the lithium source is selected from one of lithium hydroxide, lithium hydroxide, lithium carbonate, and lithium acetate.

According to some embodiments of the present disclosure, the first dopant and the second dopant are independently selected from one of carbonate, hydroxide, oxide, and acetate capable of providing at least one element of Al, Zr, Y, Ti, Nb, Cr, Er, Mg, Ba, V, Sr, Ta, Mo, W, or Ce.

According to some embodiments of the present disclosure, the coating agent is selected from oxide capable of providing at least one element of Al, B, Si, W, Ti, or Ce.

According to some embodiments of the present disclosure, the cathode active material has a formula represented by formula (2): $Li_aNi_xCo_yMn_zM_bO_2@M'$ (2), where: $0.9\leq a\leq 1.2$, $0.3\leq x<0.99$, $0.01\leq y\leq 0.5$, $0.01\leq z<0.5$, $0\leq b\leq 0.2$; M is selected from at least one of Al, Zr, Y, Ti, Nb, Cr, Er, Mg, Ba, V, Sr, Ta, Mo, W, or Ce; and M' is at least one element of Al, B, Si, W, Ti or Ce, and is coated on a surface of matrix $Li_aNi_xCo_yMn_zM_bO_2$.

In a third aspect of the present disclosure, a positive electrode plate is provided. The positive electrode plate includes: the cathode active material according to the first aspect, or the cathode active material prepared by the preparation method according to the second aspect.

In a fourth aspect, a battery is provided. The battery includes the positive electrode plate according to the third aspect. Therefore, the battery has excellent cycle performance.

In a fifth aspect, an electrical apparatus is provided. The electrical apparatus includes the battery according to the fourth aspect.

Additional aspects and advantages of the present disclosure will be provided at least in part in the following description, or will become apparent at least in part from the following description, or can be learned from practicing of the present disclosure.

**DETAILED DESCRIPTION**

Embodiments of the present disclosure are described in detail below. The embodiments described below are exemplary and are merely used to explain the present disclosure, and cannot be construed to limit the present disclosure.

In the description of the embodiments of the present disclosure, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the embodiments of the present disclosure, unless otherwise defined, "plurality" means at least two.

Reference to "embodiment" herein means that a particular feature, structure, or characteristic described in conjunction with the embodiment or implementation may be included in at least one embodiment of the present disclosure. The presence of the term at each place in the specification does not necessarily refer to the same embodiment, nor does it refer to a separate or alternative embodiment that is mutually exclusive of other embodiments. It should be understood by those skilled in the art, both explicitly and implicitly, that the embodiments described herein may be combined with other embodiments.

The "range" disclosed in the present disclosure is defined by a lower limit and an upper limit. A given range is defined by selecting one lower limit and one upper limit. The selected lower and upper limits define the boundaries of a particular range. The range defined in this way may be inclusive or exclusive of the end values and may be combined arbitrarily. That is, any lower limit may be combined with any upper limit to form a range. For example, if a range of 60 to 120 and a range of 80 to 110 are listed for particular parameters, it is understood that a range of 60 to 110 and a range of 80 to 120 are also anticipated. Further, if the minimum range values 1 and 2 are listed and the maximum range values 3, 4, and 5 are listed, the following ranges can all be anticipated: 1 to 3, 1 to 4, 1 to 5, 2 to 3, 2 to 4, and 2 to 5. In the present disclosure, unless otherwise defined, a numerical range "a to b" represents an abbreviated representation of any combination of real numbers between a to b, where both a and b are real numbers. For example, a numerical range "0 to 5" indicates that all real numbers between "0 to 5" have been listed herein, and "0 to 5" is simply an abbreviated representation of combinations of these numerical values. In addition, when a certain parameter is defined as an integer greater than or equal to 2, it means that the parameter is disclosed to be, for example, an integer of 2, 3, 4, 5, 6, 7, 8, 9, 10, 11, 12, etc.

Unless otherwise specified, all the embodiments and optional embodiments of the present disclosure may be combined with each other to form a new technical solution.

Unless otherwise specified, all technical features and optional technical features of the present disclosure may be combined with each other to form a new technical solution.

Unless otherwise specified, all steps of the present disclosure may be performed sequentially or randomly, preferably sequentially. For example, the method includes steps (a) and (b), meaning that the method may include steps (a) and (b) performed sequentially, and may also include steps (b) and (a) performed sequentially. For example, the method mentioned may further include step (c), which means that step (c) can be added to the method in any order. For example, the method may include steps (a), (b) and (c), or may include steps (a), (c) and (b), or may include steps (c), (a) and (b), etc.

In a first aspect of the present disclosure, a cathode active material is provided. An offset angle of a (104) diffraction peak of the cathode active material is $\alpha^n_m$, where n is the number of charging cycles of a battery including the cathode active material, n being an integer; m% is a percentage of a charging capacity to a total capacity of the battery at a n-th charging cycle of the battery; $\alpha^n_m$ is a 2θ value corresponding to the (104) diffraction peak in an XRD diffraction spectrum of the cathode active material when the percentage of the charging capacity to the total capacity of the battery is m% at the n-th charging cycle of the battery; and $\alpha^n_m$ satisfies: $\alpha^n_{50}-\alpha^n_0 \leq 0.250°$; and $\alpha^n_{100}-\alpha^n_0 \leq 1.500°$.

In the related art, high-nickel ternary cathode materials are widely used, but this crystal structure has a problem of instability, especially a phenomenon of Li/Ni mixed occupancy frequently occurs in the high-nickel ternary cathode materials. In addition, in repeated charging and discharging processes of the high-nickel ternary cathode material, the initial layered structure of the material changes with repeated deintercalation of Li+, and an interaction force between transition metal ions and an oxygen layer changes due to the changes in a Li layer and changes in transition metal valence states. Before or after charging and discharging, the Li layer cannot return to the initial state of the Li layer, resulting in an irreversible change in a relative position of a transition metal layer and the oxygen layer. With the increase in the number of charging and discharging cycles, such a change will be gradually intensified, such that the material structure itself has a profound impact on stability of the transition metal layer and a service life of the material. The change of this material structure with the charging and discharging is also intuitively reflected in XRD characterization. A [104] peak representing a hexagonal structure and a cubic structure may shift to the right with deintercalation of lithium. When the lithium returns to a lithium layer, the [104] peak may shift towards the initial position, but cannot return to the initial position with a structural change caused by lithium-nickel disordering. Therefore, the structural stability and electrochemical cycle performance strength of the material in a cycle process can be directly reflected by measuring the offset angle $\alpha^n_m$ of the (104) diffraction peak of the cathode active material. When the offset angle $\alpha^n_m$ of the (104) diffraction peak of the cathode active material satisfies at least one of the following conditions: $\alpha^{100}_{50}-\alpha^{100}_0 \leq 0.250°$ and $\alpha^{100}_{100}-\alpha^{100}_0 \leq 1.500°$, it indicates that the material has higher structural stability and better cycle performance.

According to a specific embodiment of the present disclosure, in the offset angle $\alpha^n_m$ of the (104) diffraction peak, n is the number of charging cycles of the battery including the cathode active material. A value of n is not particularly limited, which can be selected by those skilled in the art based on actual needs. The value of n is generally an integer ranging from 0 to 100, without including 0. As some specific examples, n is 1, 50, 100, etc.

According to a specific embodiment of the present disclosure, m% is the percentage of the charging capacity to the total capacity of the battery at the n-th charging cycle of the battery. A value of m generally ranges from 0 to 100. As some specific examples, m is 0, 10, 20, 30, 40, 50, 60, 70, 80, 90, 100, etc.

According to a specific embodiment of the present disclosure, $\alpha^n_m$ is the 2θ value corresponding to the (104) diffraction peak in the XRD diffraction spectrum of the cathode active material when the percentage of the charging capacity to the total capacity of the battery is m% at the n-th charging cycle of the battery. That is, $\alpha^n_m$ is a horizontal coordinate corresponding to the (104) diffraction peak in the XRD diffraction spectrum. A position of the (104) diffraction peak in the XRD diffraction spectrum of the cathode active material is generally between 43° to 49°. Therefore, a value of $\alpha$ corresponds to a 2θ value of the highest peak between the horizontal coordinates 43° and 49° in the XRD diffraction spectrum of the cathode active material.

According to a specific embodiment of the present disclosure, the offset angle $\alpha^n_m$ of the (104) diffraction peak of the cathode active material can be obtained by an XRD diffraction experiment, and a test method is not particularly limited. Those skilled in the art can select the test method based on the actual needs. For example, the cathode active material is prepared into a lithium-ion battery based on a conventional method. The cathode active material is fully charged and discharged at a temperature of 45°C to an n-1 cycle with a current of 1C, and charged to m% to test a full spectrum of the cathode active material by an XRD diffractometer. Test conditions of the XRD diffractometer are not particularly limited, and those skilled in the art can select based on the actual needs. For example, the test conditions include: a working temperature of $21\pm5°C$, humidity$\leq65\%$; a temperature of a cooling water circulation machine of $23\pm1°$, a water pressure of 0.36 Mpa; a refrigerant high pressure of 0.8 Mpa to 1.8 Mpa, a refrigerant low pressure of 0.4 Mpa to 0.7 Mpa; a scan speed of 5 °/min; a start angle of 10.0000, an end angle of 90.0000; SamplingW of 0.0200; an automatic rotation table speed of 60 °/min, etc.

According to an embodiment of the present disclosure, when the offset angle $\alpha^n_m$ of the (104) diffraction peak of the cathode active material further satisfies $\alpha^{100}_0-\alpha^1_0\leq0.750°$, it indicates that the cathode active material has higher structural stability and better cycle performance.

According to a specific embodiment of the present disclosure, a height change value $\Delta S_{(TMO2)}$ of a transition metal layer in the cathode active material satisfies: $\Delta S_{(TMO2)}<0.50Å$, in which: $\Delta S_{(TMO2)}=S_{(TMO2)}^0-S_{(TMO2)}^1$. $S_{(TMO2)}^1$ is a height of the transition metal layer in the cathode active material when the battery including the cathode active material is in a first full charge state. $S_{(TMO2)}^0$ is a height of the transition metal layer in the cathode active material prior to that the battery including the cathode active material is subjected to a first charge. $\Delta S_{(TMO2)}$ is a value of a change between the height of the transition metal layer in the cathode active material when the battery including the cathode active material is in the first full charge state and the height of the transition metal layer in the cathode active material prior to that the battery including the cathode active material is subjected to the first charge.

A height of the transition metal layer in the cathode active material refers to a distance between the transition metal layer and an adjacent oxygen layer in a crystal structure of the cathode active material. The height of the transition metal layer affects structural stability of the cathode active material, ability of lithium ions intercalation and deintercalation, the electrochemical performance, safety, etc. When the height change value of the transition metal layer in the cathode active material is excessively great, it is determined that the material is unable to remain stable in multiple charging and discharging processes, and the life of the material is greatly shortened. When the height change value of the transition metal layer in the cathode active material satisfies the above-described conditions, the structure of the cathode active material itself exhibits good stability for $Li^+$ deintercalation.

In an embodiment of the present disclosure, $\Delta S_{(TMO2)}$ can be obtained by the formula: $\Delta S_{(TMO2)}=S_{(TMO2)}^0-S_{(TMO2)}^1$. $S_{(TMO2)}^1$ is the height of the transition metal layer in the cathode active material when the battery including the cathode active material is in the first full charge state. $S_{(TMO2)}^0$ is a height of an initial transition metal layer in the cathode active material, that is, a height of an intrinsic transition metal layer of the cathode active material. The change and magnitude of the height of the transition metal layer can be measured by an XRD technique and other techniques, that is, $S_{(TMO2)}^1$ and $S_{(TMO2)}^0$ both can be obtained by performing an XRD diffraction test on the corresponding cathode active material combined with an XRD refinement.

In an embodiment of the present disclosure, $S_{(TMO2)}^1$ is a height of the transition metal layer in the cathode active material, obtained by performing the XRD diffraction test on the cathode material with a refinement, when the battery containing the cathode active material is in a first full charge state at a current of 1C. $S_{(TMO2)}^0$ is the height of the transition metal layer in the cathode active material, obtained by performing the XRD diffraction teat with the refinement, before the battery containing the cathode active material is subjected to the first charge. The battery containing the cathode active material can be prepared by selecting a conventional preparation method, which is not particularly limited. A refinement process can be performed using methods such as a Rietveld full-spectrum fitting refinement method. Corresponding conditions of an XRD test are also not particularly limited, which can be selected by those skilled in the art based on the actual needs. For example, the test conditions are the same as the above-described offset angle $\alpha^n_m$ of the (104) diffraction peak, which are: the working temperature of $21\pm5°C$, the humidity$\leq65\%$; the temperature of the cooling water circulation machine of $23\pm1°$, the water pressure of 0.36 Mpa; the refrigerant high pressure of 0.8 Mpa to 1.8 Mpa, the refrigerant low pressure of 0.4 Mpa to 0.7 Mpa; the scannspeed of 5°/min; the start angle of 10.0000, the end angle of 90.0000; SamplingW of 0.0200; the automatic rotation table speed of 60°/min, etc.

According to a specific embodiment of the present disclosure, the height change value $\Delta S_{(TMO2)}$ satisfies: $\Delta S_{(TMO2)}<0.45Å$, preferably $\Delta S_{(TMO2)}<0.40Å$. In this way, the structure of the cathode active material is indicated to be more stable during charging and discharging.

According to a specific embodiment of the present disclosure, the cathode active material further satisfies at least one of the following conditions.

$\alpha^n_m$ satisfies $\alpha^{100}_0-\alpha^1_0\leq0.750°$. In this way, the structure of the cathode active material is indicated to be more stable during charging and discharging.

In an intrinsic XRD diffraction spectrum of the cathode active material, a peak intensity ratio $I_{(003)}/I_{(104)}$ of a (003) diffraction peak to a (104) diffraction peak ranges from 1.20 to 1.60. In this way, a degree of the lithium-nickel disordering in the cathode active material is indicated to be low. The intrinsic XRD diffraction spectrum of the cathode active material should be understood as a diffraction spectrum obtained by performing the XRD test on the cathode active material before that the battery containing the cathode active material is subjected to the first charge.

In the intrinsic XRD diffraction spectrum of the cathode active material, when the $2\theta$ value ranges from $43°$ to $46°$, a full width at half maximum $\psi$ of a corresponding peak satisfies $0.230° \leq \psi \leq 0.260°$. In this way, the cathode active material is indicated to have a better degree of crystallinity.

A median particle size $D_{50}$ of the cathode active material satisfies: $0.8\mu m \leq D_{50} \leq 14.2\mu m$. In this way, the cathode active material is indicated to have better cycle performance.

According an embodiment of the present disclosure, the cathode active material includes a lithium-containing metal oxide having a chemical formula represented by formula (1): $Li_aNi_xCo_yMn_zM_bO_2$ (1), where: $0.9 \leq a \leq 1.2$, $0.3 \leq x < 0.99$, $0.01 \leq y \leq 0.5$, $0.01 \leq z \leq 0.5$, $0 \leq b \leq 0.2$; and M is selected from at least one of Al, Zr, Y, Ti, Nb, Cr, Er, Mg, Ba, V, Sr, Ta, Mo, W, or Ce.

The cathode active material can achieve good structural stability in the cycle process, which enables the battery containing the cathode active material to have good cycle performance.

In an embodiment of the present disclosure, the cathode active material may have a chemical formula represented by formula (2): $Li_aNi_xCo_yMn_zM_bO_2@M'$ (2), where: $0.9 \leq a \leq 1.2$, $0.3 \leq x < 0.99$, $0.01 \leq y \leq 0.5$, $0.01 \leq z \leq 0.5$, $0 \leq b \leq 0.2$; M is selected from at least one of Al, Zr, Y, Ti, Nb, Cr, Er, Mg, Ba, V, Sr, Ta, Mo, W, or Ce; and M' is at least one element of Al, B, Si, W, Ti or Ce, and is coated on a surface of matrix $Li_aNi_xCo_yMn_zM_bO_2$. In other words, the cathode active material may include a doped nickel-cobalt-manganese active material and a coating layer on at least part of a surface thereof. In this way, the cathode active material has good structural stability and good resistance to electrolyte corrosion. The coating layer includes oxide containing at least one element of Al, B, Si, W, Ti, or Ce. In addition, the cathode active material includes secondary particles formed by agglomeration of primary particles.

In a second aspect of the present disclosure, a preparation method of the cathode active material is provided. The preparation method includes: (1) mixing a cathode active material precursor, a lithium source, and a first dopant, and performing a first sintering process to obtain a cathode active material intermediate 1.

According to a specific embodiment of the present disclosure, conditions for the first sintering process includes: sintering at a temperature $T_1$ for 1.5 hours to 3 hours; heating up to a temperature $T_2$, and sintering at the temperature $T_2$ for 8 hours to 12 hours; and sintering atmosphere of oxygen.

The temperature $T_1$ ranges from $300°C$ to $500°C$. For example, the temperature $T_1$ may be $300°C$, $400°C$, $500°C$, etc. The duration of sintering at the temperature $T_1$ may be 1.5 hours to 3 hours, for example, 1.5 hours, 2 hours, 2.5 hours, 3 hours, etc. The temperature $T_2$ ranges from $650°C$ to $1,100°C$. For example, the temperature $T_2$ may be $650°C$, $700°C$, $750°C$, $800°C$, $850°C$, $900°C$, $950°C$, $1,000°C$, $1,050°C$, $1,100°C$, etc. The duration of sintering at the temperature $T_2$ may be 8 hours to 12 hours, for example, 8 hours, 9 hours, 10 hours, 11 hours, 12 hours, etc. A flow rate of oxygen ranges from 150 L/(L·h) to 200 L/(L·h). For example, the flow rate of oxygen may be 150 L/(L·h), 160 L/(L·h), 170 L/(L·h), 180 L/(L·h), 190 L/(L·h), 200 L/(L·h), etc. The flow rate of oxygen in this specification refers to a volume of oxygen introduced per unit time into a unit volume of a container, with the unit of L/(L·h).

In an embodiment of the present disclosure, the first sintering process may include: performing a pre-sintering treatment at a constant temperature or regularly varying temperature ranging from $300°C$ to $500°C$ for 1.5 hours to 3 hours, for example, heating up to $400°C$ at a heating rate ranging from $1°C/s$ to $10°C/s$ and performing the pre-treatment at the constant temperature for 3 hours, or heating up from a room temperature to $400°C$ at a uniform rate for 3 hours; and performing a second stage of calcination and lithiation at a constant temperature ($650°C$ to $1,100°C$) for 8 hours to 12 hours.

According to a specific embodiment of the present disclosure, the cathode active material precursor is a nickel-cobalt-manganese cathode active material precursor. Also, the preparation method is not particularly limited and does not affect subsequent preparation of the cathode active material. Those skilled in the art can select based on actual conditions. For example, a mixed salt solution of nickel salt, cobalt salt, and manganese salt, a precipitant, and a complexing agent solution are prepared based on a predetermined molar ratio, and are introduced into a reaction kettle, respectively. A reaction is performed by controlling ammonia concentration, a reaction temperature, a stirring speed, pH, etc. When the reaction is completed, the cathode active material precursor is obtained subsequent to aging, separation, washing, and drying. The nickel salt, the cobalt salt, the manganese salt, the precipitant, and the complexing agent solution are not particularly limited to specific types, which can be flexibly selected by those skilled in the art based on the actual conditions. For example, the nickel salt, the cobalt salt, and the manganese salt include, but are not limited to, a form of sulfate; the precipitant includes, but is not limited to, sodium hydroxide; and the complexing agent solution includes, but is not limited to, ammonia water. Similarly, the ammonia concentration, the reaction temperature, the stirring speed, and the pH can also be reasonably selected based on preparation conditions, for example, the ammonia concentration ranging from 2g/L to 8g/L, a reaction temperature ranging from $60°C$ to $80°C$, a stirring speed ranging from 400rpm/min to 800rpm/min, and a pH ranging from 10 to 12.

According to a specific embodiment of the present disclosure, a specific type of the lithium source is not particularly limited, and those skilled in the art can select based on the actual conditions. For example, the lithium source may include at least one of lithium hydroxide, lithium hydroxide, lithium carbonate, and lithium acetate.

According to a specific embodiment of the present disclosure, the first dopant is not particularly limited to a specific type, and those skilled in the art can select based on the actual needs. As some preferred embodiments, the first dopant includes, but is not limit to, one of carbonate, hydroxide, oxide, and acetate capable of providing at least one element of Al, Zr, Y, Ti, Nb, Cr, Er, Mg, Ba, V, Sr, Ta, Mo, W, or Ce.

The method further includes: (2) mixing the cathode active material intermediate 1 with a second dopant, and performing a second sintering process to obtain a cathode active material intermediate 2.

According to a specific embodiment of the present disclosure, conditions for the second sintering process includes: sintering at a temperature $T_3$ for 6 hours to 8 hours, for example, 6 hours, 7 hours, 8 hours, etc.; and sintering atmosphere of oxygen.

The temperature $T_3$ satisfies: $T_2-50\times(1.9-n)\leq T_3\leq T_2-50\times(1.1-n)$, where n is a ratio of a total molar amount of metal doping elements in the second dopant to a total molar amount of elements Ni, Co, and Mn in the cathode active material precursor. The flow rate of oxygen ranges from 150 L/L/(L·h) to 200 L/(L·h). For example, the flow rate of oxygen may be 150 L/(L·h), 160 L/(L·h), 170 L/(L·h), 180 L/(L·h), 190 L/(L·h), 200 L/(L·h), etc.

In addition, the temperature $T_3$ of this stage should not be excessively high. This stage mainly intends to dope the elements capable of stabilizing structural properties of the material at an outside of the material, which are more concentrated relative to those inside the material, to further stabilize the structure. An excessively high temperature may lead to the uniform distribution of ions added in this process. When the temperature exceeds a sintering temperature, excessive crystal growth, excessively high crystallinity, and more severe lithium-nickel disordering may occur. If the temperature of the second sintering process is excessively low, the ions added in this process may be excessively concentrated on a surface, affecting a material capacity or lowering electrical conductivity, while resulting in insufficient reaction in this stage. In this way, some main elements may be rearranged and enriched at the outside of the material and cannot be re-phased in time, affecting a result of secondary sintering.

In an embodiment of the present disclosure, the second sintering process may include: hearing up to the temperature $T_3$ at a heating rate ranging from 3°C/s to 8°C/s, and performing a constant-temperature treatment for 6 hours to 8 hours.

According to a specific embodiment of the present disclosure, a specific type of the second dopant is not particularly limited, which can be the same as or different from the first dopant in step (1). Those skilled in the art can select based on the actual needs. As some preferred solutions, the second dopant includes, but is not limit to, one of carbonate, hydroxide, oxide, and acetate capable of providing at least one element of Al, Zr, Y, Ti, Nb, Cr, Er, Mg, Ba, V, Sr, Ta, Mo, W, or Ce.

According to a specific embodiment of the present disclosure, the ratio n of the total molar amount of metal doping elements in the second dopant to the total molar amount of elements Ni, Co, and Mn in the cathode active material precursor does not exceed 1.5 mol%. In this way, a structure of a surface layer of the material is stabilized, achieving an effect of improving the stability of the material without affecting a capacity.

The method further includes: (3) mixing the cathode active material intermediate 2 with a coating agent, and performing a third sintering process to obtain the cathode active material.

According to a specific embodiment of the present disclosure, conditions for the third sintering process include: sintering at a temperature ranging from 270°C to 350°C, for example, at 270°C, 300°C, 330°C, 350°C, etc., for 6 hours to 12 hours, for example, for 6 hours, 7 hours, 8 hours, 9 hours, 10 hours, 11 hours, 12 hours, etc.

In an embodiment of the present disclosure, the third sintering process may include: uniformly heating up to the temperature ranging from 270°C to 350°C at a heating rate ranging from 2°C/min to 5°C/min at the room temperature, and sintering at a constant temperature for 6 hours to 12 hours to obtain the cathode active material.

According to a specific embodiment of the present disclosure, a specific type of the coating agent is not particularly limited, and those skilled in the art can select based on the actual needs. As some preferred embodiments, the coating agent includes, but is not limit to, oxide capable of providing at least one element of Al, B, Si, W, Ti, or Ce.

According to a specific embodiment of the present disclosure, the cathode active material has the chemical formula represented by formula (2): $Li_aNi_xCo_yMn_zM_bO_2@M'$ (2), where: $0.9\leq a\leq 1.2$, $0.3\leq x<0.99$, $0.01\leq y\leq 0.5$, $0.01\leq z\leq 0.5$, $0\leq b\leq 0.2$; M is selected from at least one of Al, Zr, Y, Ti, Nb, Cr, Er, Mg, Ba, V, Sr, Ta, Mo, W, or Ce; and M' is an element containing as least one of Al, B, Si, W, Ti or Ce, and is coated on the surface of matrix $Li_aNi_xCo_yMn_zM_bO_2$.

In a third aspect of the present disclosure, a positive electrode plate is provided. The positive electrode plate includes: the cathode active material according to the first aspect, or the cathode active material prepared by the preparation method according to the second aspect.

The positive electrode plate generally includes a positive current collector and a cathode active material layer disposed on the positive current collector. The cathode active material layer includes the cathode active material.

The positive current collector may adopt a conventional metal foil or a composite current collector (the composite current collector can be formed by disposing a metal material on a polymer substrate). As an example, the positive current collector may include at least one of copper foil, aluminum foil, nickel foil, stainless steel foil, stainless steel mesh, and carbon-coated aluminum foil.

The cathode active material includes the cathode active material according to the first aspect of the present disclosure, or the cathode active material prepared by the method according to the second aspect of the present disclosure.

The cathode active material layer may also optionally include a conductive agent and a binder. The conductive agent is used to improve electrical conductivity of the cathode active material layer. The binder is used to firmly bind the cathode active material and the binder to the positive current collector. The present disclosure does not specifically limit types of the conductive agent and the binder, which can be selected based on the actual needs.

As an example, the conductive agent may include at least one of superconducting carbon, acetylene black, carbon black, Ketjen black, carbon dots, carbon nanotubes, grapheme, and carbon nanofibers. The binder may include at least one of polyvinylidene fluoride (PVDF), vinylidene fluoride copolymer or their modified (e.g., carboxylic acid, acrylic acid, acrylonitrile, etc.) derivatives.

All of these materials can be obtained through commercial channels.

In a fourth aspect of the present disclosure, a battery is provided. The battery includes the positive electrode plate according to the third aspect of the present disclosure. Therefore, the battery has an excellent cycle life.

The battery refers to a type of battery that can be used continuously by activating an active material by charging subsequent to discharge.

It should be understood that, the battery provided in the present disclosure is the lithium-ion battery.

Generally, a battery includes a positive electrode plate, a negative electrode plate, a separator, and an electrolyte. In a charging and discharging process of the battery, active ions are intercalated and deintercalated between the positive electrode plate and the negative electrode plate. The separator is disposed between the positive electrode plate and the negative electrode plate to separate the positive electrode plate and the negative electrode plate. The electrolyte conducts ions between the positive electrode plate and the negative electrode plate.

[Negative electrode plate]

In the battery, the negative electrode plate generally includes a negative current collector and an anode active material layer disposed on the negative current collector. The anode active material layer includes the anode active material.

The negative current collector is usually a structure or a member that collects current. The negative current collector may be any material known in the art that is suitable for use as a negative current collector for a lithium secondary battery, which may adopt a conventional metal foil or a composite current collector (for example, a metal material may be disposed on a polymer substrate to form a composite current collector). As an example, the negative current collector may adopt a copper foil or a lithium sheet.

A specific type of the anode active material is not limit. The known active materials that can be used for a negative electrode of the battery can be used, and those skilled in the art can select based on the actual needs. As an example, the anode active material may include but is not limited to one or a combination of more of graphite, soft carbon, hard carbon, carbon fiber, mesophase carbon microspheres, silicon-based materials, tin-based materials, lithium titanate or other metals that can form alloys with lithium. The graphite may be selected from one or a combination of more of artificial graphite, natural graphite, and modified graphite. The silicon-based material may be selected from one or a combination of more of elemental silicon, silicon oxide compounds, silicon-carbon composites, and silicon alloys. The tin-based material may be selected from one or a combination of more of elemental tin, tin oxide compounds, and tin alloys. All of these materials can be obtained through the commercial channels.

In some embodiments, in order to further improve energy density of the battery, the anode active material may include a silicon-based material.

The anode active material also optionally includes a binder, a conductive agent, and other optional additives.

As an example, the conductive agent may include one or more of superconducting carbon, acetylene black, carbon black, Ketjen black, carbon dots, carbon nanotubes, grapheme, and carbon nanofibers.

As an example, the binder may include one or more of styrene-butadiene rubber (SBR), water-based acrylic resin, polyvinylidene fluoride (PVDF), polytetrafluoroethylene (PTFE), ethylene-vinyl acetate copolymer (EVA), polyvinyl alcohol (PVA), and polyvinyl butyral (PVB).

As an example, other optional additives may include thickening and dispersing agents (e.g., carboxymethylcellulose sodium (CMC-Na)), and PTC thermistor materials.

[Electrolyte]

The electrolyte may include an electrolyte salt and a solvent.

As an example, the electrolyte may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonyl imide (LiFSI), lithium bistrifluoromethanesulfonyl imide (LiTFSI), lithium trifluoromethanesulfonate (LiTFS), lithium difluorooxalatoborate (LiDFOB), lithium dioxalatoborate (LiBOB), lithium difluorophosphate ($LiPO_2F_2$), lithium difluorobisoxalatophosphate (LiDFOP), and lithium tetrafluorooxalatophosphate (LiTFOP).

As an example, the solvent may include at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolyte further includes additives. For example, the additives may include anode film-forming additives, cathode film-forming additives, and additives capable of improving certain properties of the battery, such as additives capable of overcoming overcharge performance of the battery, additives capable of overcoming high temperature performance of the battery, and additives capable of overcoming low temperature performance of the battery.

[Separator]

As the above-described separator, the present disclosure has no particular limitation. Any known porous structure separator with electrochemical stability and mechanical stability can be selected based on the actual needs. For example, the separator may include a combination of at least one of polyethylene, polypropylene, polyvinylidene fluoride, aramid, polyethylene terephthalate, polytetrafluoroethylene, polyacrylonitrile, polyimide, polyamide, polyester, and natural fibers.

In a fifth aspect of the present disclosure, an electrical apparatus is provided. The electrical apparatus includes the battery according to the fourth aspect. In an embodiment of the present disclosure, the battery may be used as a power source for the electrical apparatus or as an energy storage unit for the electrical apparatus. The electrical apparatus may include, but is not limited to, mobile devices (such as mobile phones, laptops), electric vehicles (such as pure electric vehicles, hybrid electric vehicles, plug-in hybrid electric vehicles, electric bicycles, electric scooters, electric golf carts, electric trucks), electric trains, ships and satellites, and energy storage systems.

The solutions of the present disclosure are explained below in conjunction with the embodiments. It will be appreciated by those skilled in the art that the following embodiments are only used to illustrate the present disclosure and should not be constructed as limiting the scope of the present disclosure. The techniques or conditions without specific indication shall be those described in the literature in the field or in accordance with the product specification. The reagents or instruments used without the indication of the manufacturers are all conventional products that can be purchased commercially.

**Example 1**

[Preparation of lithium metal oxide $Li_{1.03}Ni_{0.896}Co_{0.057}Mn_{0.037}Al_{0.008}W_{0.001}Sr_{0.001}O_2$ and cathode active material $Li_{1.03}Ni_{0.896}Co_{0.057}Mn_{0.037}Al_{0.008}W_{0.001}Sr_{0.001}O_2@B$ with a coating layer containing B element]

(1) Based on a stoichiometric ratio of $Li_{1.03}Ni_{0.896}Co_{0.057}Mn_{0.037}Al_{0.008}W_{0.001}Sr_{0.001}O_2$, nickel sulfate salt, cobalt sulfate salt, and manganese sulfate salt were mixed and dissolved in pure water to obtain a mixed salt solution A with concentration of 2 mol/L. A sodium hydroxide solution with concentration of 8 mol/L was prepared as a precipitant solution B. An ammonia solution with concentration of 6 mol/L is prepared as a complexing agent solution C. The solutions A, B and C were added to a reaction kettle through a liquid inlet pipe, while maintaining ammonia concentration of the system to range from 6 g/L to 8 g/L and a temperature of the reaction system at 60°C, with a stirring speed of 600 rpm, and pH of the reaction system was stabilized at 11.3. After the reaction was completed, a precursor material was obtained after aging, separation, washing and drying.

(2) The above-described precursor, lithium hydroxide, aluminum oxide, tungsten oxide, and strontium carbonate were weighed in a molar ratio of 0.99:1.03:0.002:0.001:0.001, respectively, uniformly mixed in a mixer, and sintered at a constant temperature in an oxygen furnace with an oxygen flow rate of 500 L/h. Specifically, the mixture was uniformly heated up from a room temperature to 300°C ($T_1$) within 3 hours, followed by maintaining the temperature for 2hours, and then the mixture was uniformly heated up to a temperature of 780°C ($T_2$) within 6 hours and sintered at the constant temperature for 12 hours. Thereafter, the mixture was cooled naturally, followed by crushing and sieving, to obtain the cathode active material intermediate 1.

(3) The above-described cathode active material intermediate 1 was fully mixed with 0.002 molar aluminum oxide in the mixer, and sintered at a constant temperature in the oxygen furnace with the oxygen flow rate of 500 L/h. Specifically, the mixture was uniformly heated up from the room temperature to the temperature of 300°C within 3 hours, followed by maintaining the temperature for 2 hours, and then the mixture was uniformly heated up to a temperature of 650°C ($T_3$) within 6 hours and sintered at the constant temperature for 8 hours, and cool naturally. Thereafter, the mixture was cooled naturally, followed by crushing and sieving, to obtain the cathode active material intermediate 2.

(4) The cathode active material intermediate 2 and a boric acid powder material were mixed uniformly in a high-speed mixer at a molar ratio of 1:0.01, and sintered in the oxygen furnace at a constant temperature of 350°C for 10 hours. After cooling, sieving, and iron removal, the cathode active material was obtained.

[Preparation of the positive electrode plate]

9.5 g of $Li_{1.03}Ni_{0.896}Co_{0.057}Mn_{0.037}Al_{0.008}W_{0.001}Sr_{0.001}O_2$@B prepared as above, 0.25 g of acetylene black, and an N-methylpyrrolidone (NMP) solution containing 0.25 g of polyvinylidene fluoride (PVDF) were mixed to form cathode slurry. The cathode slurry was coated on an aluminum foil and dried, stamped into a positive electrode plate with a diameter of 12 mm and a thickness of 120 $\mu$m at a pressure of 100 MPa, and subsequently dried in a vacuum drying oven at a temperature of 120°C for 12 hours.

[Preparation of the negative electrode plate]

A Li metal sheet with a diameter of 17 mm and a thickness of 1 mm was used as the negative electrode.

[Preparation of the electrolyte]

1.0 mol/L $LiPF_6$ solution was used as the electrolyte. A mixture of equal amount of ethylene carbonate (EC) and diethyl carbonate (DEC) was used as the solvent.

[Separator]

A polyethylene porous film with a thickness of 25 $\mu$m was used as the separator.

The positive electrode plate, the separator, and the negative electrode plate were stacked in order, in such a manner that the separator was located between the positive electrode plate and negative electrode plate to separate the positive electrode plate and the negative electrode plate. The positive electrode plate, the separator, and the negative electrode plate were wound to form an electrode assembly. The electrode assembly was placed in a package, and the prepared electrolyte was injected into the dried secondary battery. After vacuum packaging, standing, forming, and shaping, the lithium-ion battery was obtained.

The lithium-ion batteries containing the cathode active materials of Examples 2 to 9 and Comparative Examples 1 to 5 were the same as Example 1 except for different parameters as listed in Table 1. Chemical formulas of the obtained cathode active materials were illustrated in Table 2.

[Table 1]

| | First dopant composition | First sintering temperature T₁ | First sintering temperature T₂ | Second dopant composition | n | Second sintering temperature T₃ | Molar ratio of metal doping elements |
|---|---|---|---|---|---|---|---|
| Example 1 | Aluminum oxide Tungsten trioxide Strontium carbonate | 300°C | 780°C | Aluminum oxide | 0.004 | 700°C | Al:W:Sr = 0.008:0.001:0.001 |
| Example 2 | Aluminum oxide Niobium oxide Tungsten trioxide | 300°C | 780°C | Aluminum oxide | 0.003 | 700°C | Al:Nb:W = 0.006:0.003:0.001 |
| Example 3 | Zirconium dioxide Yttrium oxide Titanium dioxide | 400°C | 780°C | Zirconium dioxide | 0.003 | 700°C | Zr:Y:Ti = 0.005:0.004:0.001 |
| Example 4 | Chromic oxide Magnesium oxide | 500°C | 1000°C | Chromic oxide | 0.002 | 940°C | Cr:Mg = 0.007:0.003 |
| Example 5 | Tantalum oxide Tungsten trioxide Cerium oxide | 500°C | 900°C | Vanadium oxide | 0.001 | 840°C | Ta:W:Ce:V = 0.005:0.002:0.002: 0.001 |
| Example 6 | Erbium oxide Barium oxide Molybdenum oxide | 300°C | 950°C | Erbium oxide | 0.004 | 870°C | Er:Ba:Mo = 0.007:0.002:0.001 |
| Example 7 | Aluminum oxide Tungsten trioxide Zirconium dioxide | 300°C | 780°C | Aluminum oxide | 0.004 | 700°C | Al:W:Zr = 0.006:0.003:0.001 |
| Example 8 | Aluminum oxide | 300°C | 750°C | Aluminum oxide | 0.01 | 680°C | Al = 0.02 |
| Example 9 | Aluminum oxide | 450°C | 800°C | Tungsten trioxide | 0.004 | 740°C | Al:W = 0.006:0.004 |
| Comparative Example 1 | Aluminum oxide Lanthanum oxide Zirconium dioxide | 300°C | 780°C | Aluminum oxide | 0.004 | 700°C | Al:La:Zr = 0.006:0.003:0.001 |
| Comparative Example 2 | Aluminum oxide Tungsten trioxide Strontium carbonate | / | 780°C | Aluminum oxide | 0.004 | 650°C | Al:W:Sr = 0.008:0.001:0.001 |
| Comparative Example 3 | Aluminum oxide Tungsten trioxide Strontium carbonate | 300°C | 780°C | / | / | / | Al:W:Sr = 0.008:0.001:0.001 |
| Comparative Example 4 | Aluminum oxide Tungsten trioxide Strontium carbonate | 300°C | 780°C | Aluminum oxide | 0.004 | 600°C | Al:W:Sr = 0.008:0.001:0.001 |
| Comparative Example 5 | Aluminum oxide Tungsten trioxide Strontium carbonate | 300°C | 780°C | Aluminum oxide | 0.004 | 800°C | Al:W:Sr = 0.008:0.001:0.001 |

In Table 1, "/" means no addition or none.

[Table 2]

| | Composition |
|---|---|
| Example 1 | $Li_{1.03}Ni_{0.896}Co_{0.057}Mn_{0.037}Al_{0.008}W_{0.001}Sr_{0.001}O_2@B$ |
| Example 2 | $Li_{1.03}Ni_{0.896}Co_{0.057}Mn_{0.037}Al_{0.006}Nb_{0.003}W_{0.001}O_2@B$ |
| Example 3 | $Li_{1.03}Ni_{0.896}Co_{0.057}Mn_{0.037}Zr_{0.005}Y_{0.004}Ti_{0.001}O_2@B$ |
| Example 4 | $Li_{1.03}Ni_{0.896}Co_{0.057}Mno_{0.037}Cr_{0.007}Mg_{0.003}O_2@B$ |
| Example 5 | $Li_{1.03}Ni_{0.896}Co_{0.057}Mn_{0.037}Ta_{0.005}W_{0.002}Ce_{0.002}V_{0.001}O_2@B$ |
| Example 6 | $Li_{1.03}Ni_{0.896}Co_{0.057}Mn_{0.037}Er_{0.007}Ba_{0.002}Mo_{0.001}O_2@B$ |
| Example 7 | $Li_{1.03}Ni_{p.896}Co_{0.057}Mn_{o.037}Al_{0.006}W_{0.003}Zr_{0.001}O_2@B$ |
| Example 8 | $Li_{1.03}Ni_{0.896}Co_{0.057}Mn_{0.037}Al_{0.02}O_2@B$ |
| Example 9 | $Li_{1.03}Ni_{0.896}Co_{0.057}Mn_{0.037}Al_{0.006} W_{0.004}O_2@B$ |
| Comparative Example 1 | $Li_{1.03}Ni_{0.896}Co_{0.057}Mn_{0.037}Al_{0.006}La_{0.003}Zr_{0.001}O_2@B$ |
| Comparative Example 2 | $Li_{1.03}Ni_{0.896}Co_{0.057}Mn_{0.037}Al_{0.008}W_{0.001}Sr_{0.001}O_2@B$ |
| Comparative Example 3 | $Li_{1.03}Ni_{0.896}Co_{0.057}Mn_{0.037}Al_{0.008}W_{0.001}S_{r0001}O_2@B$ |
| Comparative Example 4 | $Li_{1.03}Ni_{0.896}Co_{0.057}Mn_{0.037}Al_{0.008}W_{0.001}Sr_{0.001}O_2@B$ |

(continued)

|  | Composition |
|---|---|
| Comparative Example 5 | $Li_{1.03}Ni_{0.896}Co_{0.057}Mn_{0.037}Al_{0.008}W_{0.001}Sr_{0.001}O_2$@B |
| Note: In Table 2, a chemical formula in front of @ represents the composition of lithium metal oxide in the cathode active material, and the chemical formula behind @ represents a main element in the coating layer. | |

Test and Analysis:

1. XRD tests are performed on the cathode active materials of Examples 1 to 9 and Comparative Examples 1 to 5, and test results are illustrated in Table 3.
Determination of $\alpha^1_{100}$, $\alpha^1_{50}$, $\alpha^1_0$, $I_{(003)}/I_{(104)}$, full width at half maximum $\psi$, and $\Delta S_{(TMO2)}$: All were measured by an X-ray diffractometer (XRD). Specific test conditions included: a working temperature of $21\pm5°C$, humidity$\leq65\%$; a temperature of a cooling water circulation machine of $23\pm1°$, a water pressure of 0.36 Mpa; a refrigerant high pressure ranges from 0.8 Mpa to 1.8 Mpa, a refrigerant low pressure ranges from 0.4 Mpa to 0.7 Mpa; a scan speed of 5°/min; a start angle of 10.0000, an end angle of 90.0000; SamplingW of 0.0200; an automatic rotation table speed of 60°/min, etc. By conducting the XRD diffraction test on the corresponding cathode active material and combining with the XRD refinement calculation, $S_{(TMO2)}^1$ and $S_{(TMO2)}^0$ were obtained, and $\Delta S_{(TMO2)}$ is obtained based on the equation $\Delta S_{(TMO2)}= S_{(TMO2)}^1 - S_{(TMO2)}^0$.
2. Cycle performances of the lithium ion batteries of Examples 1 to 9 and Comparative examples 1 to 5 were tested, respectively. Test results were illustrated in Table 3.

Test method: a battery sample was charged and discharged twice at a current density of 20 mA/g, with a cut-off voltage ranging from 3.0 to 4.3 V, and activation was completed. The activated battery sample was subjected to 100 charge-discharge cycles at a temperature of 45°C, with a current density of 1C applied within a voltage ranging from 3.0 to 4.3 V. The cyclic performance of the battery sample was characterized by a high-temperature capacity retention rate, i.e., discharge specific capacity at the 100-th cycle/ initial discharge specific capacity $\times$ 100%.

[Table 3]

| | $\alpha^1_{50}-\alpha^1_0$ (°) | $\alpha^1_{100}-\alpha^1_0$ (°) | $\alpha^{100}_{50}-\alpha^{100}_0$ (°) | $\alpha^{100}_{100}-\alpha^{100}_0$ (°) | $\alpha^{100}_0-\alpha^1_0$ (°) | $\Delta S_{(TMO2)}$ (Å) | $I_{(003)}/I_{(104)}$ | Capacity retention rate (%) |
|---|---|---|---|---|---|---|---|---|
| Example 1 | 0.242 | 1.426 | 0.247 | 1.473 | 0.643 | 0.44 | 1.33 | 92.8 |
| Example 2 | 0.214 | 0.982 | 0.222 | 1.001 | 0.544 | 0.36 | 1.45 | 92.7 |
| Example 3 | 0.231 | 1.355 | 0.238 | 1.429 | 0.632 | 0.42 | 1.34 | 91.8 |
| Example 4 | 0.240 | 1.235 | 0.242 | 1.332 | 0.558 | 0.41 | 1.52 | 92.1 |
| Example 5 | 0.238 | 1.345 | 0.243 | 1.387 | 0.620 | 0.48 | 1.41 | 92.0 |
| Example 6 | 0.244 | 1.239 | 0.247 | 1.622 | 0.593 | 0.39 | 1.30 | 92.3 |
| Example 7 | 0.233 | 0.977 | 0.242 | 1.381 | 0.541 | 0.37 | 1.28 | 91.5 |
| Example 8 | 0.242 | 1.433 | 0.243 | 1.480 | 0.645 | 0.45 | 1.44 | 92.2 |
| Example 9 | 0.235 | 1.023 | 0.240 | 1.439 | 0.544 | 0.44 | 1.50 | 92.7 |
| Comparative Example 1 | 0.252 | 1.584 | 0.260 | 1.855 | 0.832 | 0.65 | 1.18 | 89.6 |
| Comparative Example 2 | 0.253 | 1.657 | 0.259 | 1.876 | 1.023 | 0.70 | 1.12 | 89.3 |
| Comparative Example 3 | 0.266 | 1.769 | 0.271 | 1.920 | 0.989 | 0.66 | 1.10 | 86.6 |
| Comparative Example 4 | 0.274 | 1.835 | 0.275 | 1.930 | 1.011 | 0.69 | 1.07 | 88.0 |
| Comparative Example 5 | 0.262 | 1.680 | 0.266 | 1.891 | 0.966 | 0.58 | 1.12 | 89.1 |

Result Analysis:

(1) The cathode active materials in Examples 1 to 9 were all obtained by the preparation method provided by the present disclosure. The corresponding values of $\alpha^{100}_{50}$ - $\alpha^{100}_0$ were all below 0.250°, the values of $\alpha^{100}_{100}$ - $\alpha^{100}_0$ were all below 1.500°, the values of $\alpha^{100}_0$ - $\alpha^1_0$ were all below 0.750°, the values of $\Delta S_{(TMO2)}$ were all below 0.50Å, and the values of $I_{(003)}/I_{(104)}$ all ranged from 1.20 to 1.60, indicating that these material had good structural stability, good stability for Li+ deintercalation, and the battery containing the material had a long cycle life.

(2) Compared with Example 7, a doping element W in Comparative Example 1 was replaced with La. As illustrated in Table 3, the value of the change of $\alpha^n_m$, $\Delta S_{(TMO2)}$, and $I_{(003)}/I_{(104)}$ of the prepared cathode active material were not within the ranges of the present disclosure. In addition, a capacity retention rate (89.6%) of the battery of Comparative Example 1 was also lower than that of Example 7 (91.5%), indicating that the selected doping element provided by the present disclosure is more conducive to the structural stability of the cathode active material and the cycle life of the battery containing the same.

(3) Compared with Example 1, in Comparative Example 2, the two-stage sintering in the first sintering process was replaced with the one-stage sintering. As illustrated in Table 3, the value of the change of $\alpha^n_m$, $\Delta S_{(TMO2)}$, and $I_{(003)}/I_{(104)}$ of the prepared cathode active material were not within the ranges of the present disclosure. In addition, a capacity retention rate (89.3%) of the battery of Comparative Example 2 was also lower than that of Example 1 (92.8%), indicating that the two-stage sintering in the first sintering process was more conducive to the structural stability of the cathode active material and the cycle life of the battery containing the same.

(4) Compared with Example 1, the second sintering process is omitted in Comparative Example 3. As illustrated in Table 3, the value of the change of $\alpha^n_m$, $\Delta S_{(TMO2)}$, and $I_{(003)}/I_{(104)}$ of the prepared cathode active material were not within the ranges of the present disclosure. In addition, a capacity retention rate (86.6%) of the battery of Comparative Example 3 as also lower than that of Example 1 (92.8%), indicating that the combination of the first sintering process and the second sintering process was more conducive to the structural stability of the cathode active material and the cycle life of the battery containing the same.

(5) Compared with Example 1, a sintering temperature in the second sintering process in Comparative Example 4 was lowered. As illustrated in Table 3, the value of the change of $\alpha^n_m$, $\Delta S$, and $I_{(003)}/I_{(104)}$ of the prepared cathode active material were not within the ranges of the present disclosure. In addition, a capacity retention rate (88.0%) of the battery of Comparative Example 4 is also lower than that of Example 1 (92.8%), indicating that the combination of the first sintering process and the second sintering process was more conducive to the structural stability of the cathode active material and the cycle life of the battery containing the same.

(6) Compared with Example 1, the sintering temperature in the second sintering process in Comparative Example 5 was increased. As illustrated in Table 3, the value of the change of $\alpha^n_m$, $\Delta S_{(TMO2)}$, and $I_{(003)}/I_{(104)}$ of the prepared cathode active material were not within the ranges of the present disclosure. In addition, a capacity retention rate (89.1%) of the battery of Comparative Example 5 is also lower than that of Example 1 (92.8%), indicating that the temperature range as required by the present disclosure is more conducive to the structural stability of the cathode active material and the cycle life of the battery containing the same.

Reference throughout this specification to "an embodiment", "some embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of the present disclosure have been shown and described above, it should be understood that above embodiments are merely exemplary, and cannot be construed to limit the present disclosure. For those skilled in the art, various changes, modifications, replacements, and variations can be made to the embodiments without departing from the scope of the present disclosure.

**Claims**

1. A cathode active material, wherein an offset angle of a (104) diffraction peak of the cathode active material is $\alpha^n_m$, wherein:

n is the number of charging cycles of a battery comprising the cathode active material, n being an integer;

m% is a percentage of a charging capacity to a total capacity of the battery at a n-th charging cycle of the battery;

$\alpha^n_m$ is a 2θ value corresponding to the (104) diffraction peak in an XRD diffraction spectrum of the cathode active material when the percentage of the charging capacity to the total capacity of the battery is m% at the n-th charging cycle of the battery; and

$\alpha^n_m$ satisfies: $\alpha^{100}_{50} - \alpha^{100}_0 \leq 0.250°$, and $\alpha^{100}_{100} - \alpha^{100}_0 \leq 1.500°$.

2. The cathode active material according to claim 1, wherein a height change value $\Delta S_{(TMO2)}$ of a transition metal layer in the cathode active material satisfies: $\Delta S_{(TMO2)} < 0.50Å$, wherein:

$$\Delta S_{(TMO2)} = S_{(TMO2)}^0 - S_{(TMO2)}^1;$$

$S_{(TMO2)}^1$ is a height of the transition metal layer in the cathode active material when the battery comprising the cathode active material is in a first full charge state;

$S_{(TMO2)}^0$ is a height of the transition metal layer in the cathode active material prior to that the battery comprising the cathode active material is subjected to a first charge;

$\Delta S_{(TMO2)}$ is a value of a change between the height of the transition metal layer in the cathode active material when the battery comprising the cathode active material is in the first full charge state and the height of the transition metal layer in the cathode active material prior to that the battery comprising the cathode active material is subjected to the first charge.

3. The cathode active material according to claim 2, wherein the height change value $\Delta S_{(TMO2)}$ of the transition metal layer in the cathode active material satisfies: $\Delta S_{(TMO2)} < 0.45Å$.

4. The cathode active material according to claim 2, wherein the height change value $\Delta S_{(TMO2)}$ of the transition metal layer in the cathode active material satisfies: $\Delta S_{(TMO2)} < 0.40Å$.

5. The cathode active material according to claim 1, satisfying at least one of the following conditions:

$\alpha^n_m$ satisfies $\alpha^{100}_0 - \alpha^1_0 \leq 0.750°$;

in an intrinsic XRD diffraction spectrum of the cathode active material, a peak intensity ratio $I_{(003)}/I_{(104)}$ of a (003) diffraction peak to a (104) diffraction peak ranges from 1.20 to 1.60;

in the intrinsic XRD diffraction spectrum of the cathode active material, when the 2θ value ranges from 43° to 46°, a full width at half maximum $\psi$ of a corresponding peak satisfies $0.230° \leq \psi \leq 0.260°$; and

a median particle size $D_{50}$ of the cathode active material satisfies $0.8\mu m \leq D_{50} \leq 14.2\mu m$.

6. The cathode active material according to any one of claims 1 to 5, comprising a lithium-containing metal oxide having a chemical formula represented by formula (1):

$$Li_a Ni_x Co_y Mn_z M_b O_2 \qquad (1),$$

where:

$$0.9 \leq a \leq 1.2,\ 0.3 \leq x < 0.99,\ 0.01 \leq y \leq 0.5,\ 0.01 \leq z \leq 0.5,\ 0 \leq b \leq 0.2;$$

and

M is selected from at least one of Al, Zr, Y, Ti, Nb, Cr, Er, Mg, Ba, V, Sr, Ta, Mo, W, or Ce.

7. The cathode active material according to claim 6, further comprising a coating layer disposed on a surface of the lithium-containing metal oxide.

8. The cathode active material according to claim 7, wherein the coating layer comprises oxide containing at least one element of Al, B, Si, W, Ti, or Ce.

9. A preparation method of the cathode active material according to any one of claims 1 to 8, the preparation method comprising:

**EP 4 679 518 A1**

step 1: mixing a cathode active material precursor, a lithium source, and a first dopant, and performing a first sintering process to obtain a cathode active material intermediate 1;

step 2: mixing the cathode active material intermediate 1 with a second dopant, and performing a second sintering process to obtain a cathode active material intermediate 2; and

step 3: mixing the cathode active material intermediate 2 with a coating agent, and performing a third sintering process to obtain the cathode active material.

10. The preparation method according to claim 9, wherein conditions for the first sintering process comprise:

sintering at a temperature $T_1$ for 1.5 hours to 3 hours, the temperature $T_1$ ranging from 300°C to 500°C; heating up to a temperature $T_2$, and sintering at the temperature $T_2$ for 8 hours to 12 hours, the temperature $T_2$ ranging from 650°C to 1,100°C; and sintering atmosphere of oxygen, a flow rate of oxygen ranging from 150 L/(L·h) to 200 L/(L·h).

11. The preparation method according to claim 9, wherein conditions for the second sintering process comprise:

sintering at a temperature $T_3$ for 6 hours to 8 hours, the temperature $T_3$ satisfying $T_2-50\times(1.9-n)\leq T_3\leq T_2-50\times(1.1-n)$, where n is a ratio of a total molar amount of metal doping elements in the second dopant to a total molar amount of elements Ni, Co, and Mn in the cathode active material precursor; and sintering atmosphere of oxygen, a flow rate of oxygen ranging from 150 L/(L·h) to 200 L/(L·h).

12. The preparation method according to claim 9, wherein conditions for the third sintering process comprise: sintering at a temperature ranging from 270°C to 350°C for 6 hours to 12 hours.

13. The preparation method according to claim 9, wherein the cathode active material precursor is a nickel-cobalt-manganese cathode active material precursor.

14. The preparation method according to claim 9, wherein the lithium source is selected from one of lithium hydroxide, lithium hydroxide, lithium carbonate, and lithium acetate.

15. The preparation method according to claim 9, wherein the first dopant and the second dopant are independently selected from one of carbonate, hydroxide, oxide, and acetate capable of providing at least one element of Al, Zr, Y, Ti, Nb, Cr, Er, Mg, Ba, V, Sr, Ta, Mo, W, or Ce.

16. The preparation method according to claim 9, wherein the coating agent is selected from oxide capable of providing at least one element of Al, B, Si, W, Ti, or Ce.

17. A positive electrode plate, comprising:

the cathode active material according to any one of claims 1 to 8; or the cathode active material prepared by the preparation method according to any one of claims 9 to 16.

18. A battery, comprising the positive electrode plate according to claim 17.

19. An electrical apparatus, comprising the battery according to claim 18.

17

## INTERNATIONAL SEARCH REPORT

| International application No. |
| --- |
| **PCT/CN2024/096387** |

### A. CLASSIFICATION OF SUBJECT MATTER

H01M4/131(2010.01)i; H01M4/525(2010.01)i; H01M4/505(2010.01)i; H01M4/485(2010.01)i; H01M4/36(2006.01)i; H01M10/0525(2010.01)i; C01G53/00(2025.01)i

According to International Patent Classification (IPC) or to both national classification and IPC

### B. FIELDS SEARCHED

Minimum documentation searched (classification system followed by classification symbols)

IPC/CPC: H01M; C01G

Documentation searched other than minimum documentation to the extent that such documents are included in the fields searched

Electronic data base consulted during the international search (name of data base and, where practicable, search terms used)

CNKI, CNTXT, ENTXTC, ENTXT, VEN, VCN, DWPI, WEB OF SCIENCE: 包覆, 变化, 掺杂, 充电, 充电后, 充电前, 第二, 第三, 第一, 偏移, 偏移角, 气氛, 圈, 烧结, 循环, 衍射峰, 正极活性, 104峰, coating, change, offset angle, charging, before charging, after charging, number of cycles, cycle, atmosphere, sintering, calcination, doping, diffraction peak, positive electrode active material, first, second, third

### C. DOCUMENTS CONSIDERED TO BE RELEVANT

| Category* | Citation of document, with indication, where appropriate, of the relevant passages | Relevant to claim No. |
| --- | --- | --- |
| A | CN 114703544 A (BEIJING EASPRING MATERIAL TECHNOLOGY CO., LTD.) 05 July 2022 (2022-07-05)<br>claims 1-10 | 1-19 |
| A | CN 117043974 A (NINGDE AMPEREX TECHNOLOGY LTD.) 10 November 2023 (2023-11-10)<br>claims 1-12 | 1-19 |
| A | CN 110031490 A (SHENZHEN BAK BATTERY CO., LTD.) 19 July 2019 (2019-07-19)<br>entire document | 1-19 |
| A | CN 111954947 A (BASF TODA BATTERY MATERIALS LLC) 17 November 2020 (2020-11-17)<br>entire document | 1-19 |
| A | CN 115911274 A (BEIJING EASPRING MATERIAL TECHNOLOGY CO., LTD.) 04 April 2023 (2023-04-04)<br>entire document | 1-19 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 December 2024** | **03 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

<table>
<tr><td colspan="2">International application No.</td></tr>
<tr><td colspan="2">**PCT/CN2024/096387**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | CN 117129127 A (INSTITUTE OF ELECTRICAL ENGINEERING, CHINESE ACADEMY OF SCIENCES) 28 November 2023 (2023-11-28)<br>      entire document | 1-19 |
| A | CN 117154033 A (BEIJING EASPRING MATERIAL TECHNOLOGY CO., LTD. et al.) 01 December 2023 (2023-12-01)<br>      entire document | 1-19 |
| A | WO 2024000452 A1 (NINGDE AMPEREX TECHNOLOGY LTD.) 04 January 2024 (2024-01-04)<br>      entire document | 1-19 |

Form PCT/ISA/210 (second sheet) (July 2022)

**INTERNATIONAL SEARCH REPORT**
Information on patent family members

International application No.

**PCT/CN2024/096387**

| Patent document cited in search report | | | Publication date (day/month/year) | Patent family member(s) | | | Publication date (day/month/year) |
|---|---|---|---|---|---|---|---|
| CN | 114703544 | A | 05 July 2022 | None | | | |
| CN | 117043974 | A | 10 November 2023 | None | | | |
| CN | 110031490 | A | 19 July 2019 | None | | | |
| CN | 111954947 | A | 17 November 2020 | KR | 20200130822 | A | 20 November 2020 |
| | | | | US | 2020411861 | A1 | 31 December 2020 |
| | | | | US | 12051804 | B2 | 30 July 2024 |
| | | | | JP | 2019165002 | A | 26 September 2019 |
| | | | | JP | 6968844 | B2 | 17 November 2021 |
| CN | 115911274 | A | 04 April 2023 | None | | | |
| CN | 117129127 | A | 28 November 2023 | None | | | |
| CN | 117154033 | A | 01 December 2023 | None | | | |
| WO | 2024000452 | A1 | 04 January 2024 | None | | | |

Form PCT/ISA/210 (patent family annex) (July 2022)

**EP 4 679 518 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410545370